Europäisches Patentamt

European Patent Office

Office européen des brevets

(19)

(11) Publication number: **0 305 594 B1**

# EUROPEAN PATENT SPECIFICATION

(12)

(45) Date of publication of patent specification: **30.10.91**

(51) Int. Cl.⁵: **F16H 61/04**

(21) Application number: **87117579.0**

(60) Publication number of the earlier application in accordance with Art.76 EPC: **0 103 751**

(22) Date of filing: **17.08.83**

(54) **Hydraulic control system for an automatic transmission.**

(30) Priority: **20.08.82 JP 143288/82**

(43) Date of publication of application:
**08.03.89 Bulletin 89/10**

(45) Publication of the grant of the patent:
**30.10.91 Bulletin 91/44**

(84) Designated Contracting States:
**DE FR GB**

(56) References cited:
**EP-A- 0 026 925**
**FR-A- 2 046 430**
**US-A- 3 656 373**
**US-A- 3 685 372**
**US-A- 4 065 985**

(73) Proprietor: **NISSAN MOTOR CO., LTD.**
**No.2, Takara-cho, Kanagawa-ku**
**Yokohama City(JP)**

(72) Inventor: **Sugano, Kazuhiko**
**No. 3-4688-1 Sobudai**
**Zama City(JP)**

(74) Representative: **Patentanwälte Grünecker,**
**Kinkeldey, Stockmair & Partner**
**Maximilianstrasse 58**
**W-8000 München 22(DE)**

Rank Xerox (UK) Business Services

## Description

The present invention relates to a hydraulic control system for an automatic transmission according to the preamble part of the single main claim.

Such a hydraulic control system is known from EP-A-26925 and includes a plurality of fluid pressure operated friction units which are selectively made operative and inoperative to produce first, second, third and fourth forward speed ratios, the plurality of fluid pressure operated friction units including a first clutch which is pressurised and engaged during the first, second and forward speed ratios, and depressurised and disengaged during the fourth speed ratio, the plurality of fluid operated friction units including a second clutch which is pressurised and engaged during the third and fourth speed ratios, and depressurised and disengaged during first and second speed ratios. The hydraulic control system furthermore comprises means for defining a conduit having one end communicating with the first clutch and an opposite end, and a timing valve connected with the opposite end of said conduit and communicating with a second clutch. The timing valve has an orifice and means which is operative in response to the fluid pressure supply thereto for discharging hydraulic fluid from said conduit through said orifice when the hydraulic fluid pressure supplied to the second clutch than a predetermined value, but bypassing said orifice when the hydraulic fluid pressure supplied thereto rises above said predetermined value.

The transmission known from the prior art undergoes a shift between two remote forward speed ratios in addition to a shift between two next adjacent forward speed ratios. Taking a four-speed automatic transmission as an example, there takes place a shift between fourth and first speed ratios, a shift between the fourth and second speed ratios and a shift between the first and third speed ratios in addition to normal shifts between the next adjacent two forward speed ratios. If it is desired to alleviate shock occuring during each shift while preventing the racing of an engine associated with the automatic transmission, many timing valves must be provided, each for one of the above-listed shifts. If this measure is employed, a bulky and expensive control system results which is not acceptable.

FR-A-2046430 discloses another hydraulic control system having a timing valve which discharges hydraulic fluid, and which furthermore comprises an orifice. However, the orifice of the known control system is not closed so that fluid is discharged to bypass the orifice.

It is an object underlying the present invention to provide a hydraulic control system according to the preamble part of the single main claim wherein the shift timing for each of two kinds of shifts is controlled by a single timing valve in which the control of discharge of hydraulic fluid is accurately performed.

The solution of this object is achieved by the features of the main claim.

## BRIEF DESCRIPTION OF THE DRAWINGS

Fig. 1 is a schematic view of a power transmission mechanism of a four speed automatic transmission as illustrated in connection with an engine which has a throttle mounted in an intake passage and an accelerator pedal; and

Figs. 2(a), 2(b), 2(c) and 3, when combined, illustrate a circuit diagram of a preferred embodiment of a hydraulic control system for the automatic transmission according to the present invention.

## DETAILED DESCRIPTION OF THE INVENTION

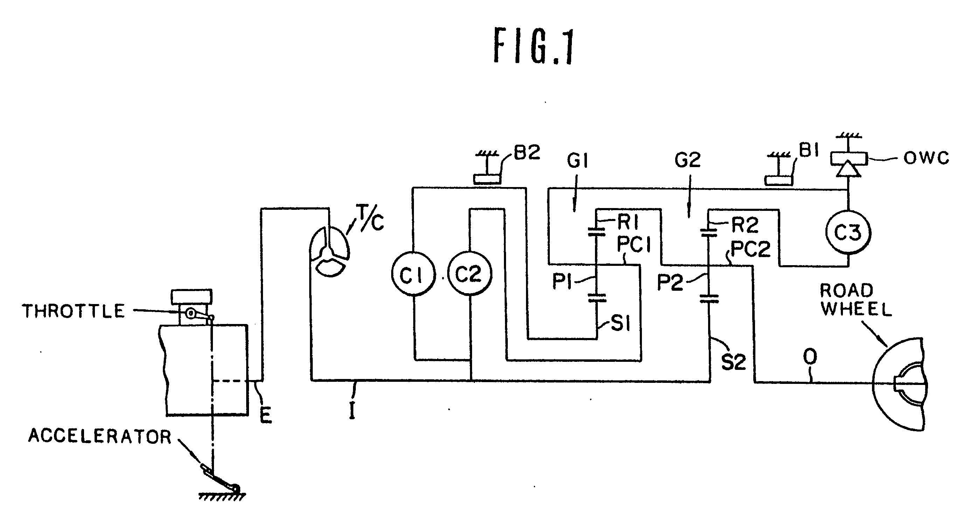

Referring to Fig. 1, there is illustrated a power transmission mechanism of a four forward speed and one reverse speed automatic transmission having an overdrive. This power transmission mechanism comprises an input shaft I operatively connected via a torque converter T/C to an engine output shaft E of an engine which has a throttle which opens in degrees, an output shaft O operatively connected to road wheels, only one being shown, via a final drive, not shown. A first planetary gear set G1 and a second planetary gear set G2 are connected between the input and output shafts I and O. A plurality of fluid operated friction units are provided which are made operative and inoperative for producing a plurality of speed ratios between the input shaft I and output shaft O. The fluid operated frictional units include a first clutch C1, a second clutch C2, a third clutch C3, a first brake B1, a second brake B2, and a one-way clutch OWC. The first planetary gear set G1 comprises a sun gear S1, an internal gear R1, a carrier PC1 carrying pinion gears P1 meshing simultaneously both the gears S1 and R1. The planetary gear set G2 comprises a sun gear S2, an internal gear R2 and a carrier PC2 carrying pinion gears P2 meshing simultaneously both gears S2 and R2. The carrier PC1 is connectable via the clutch C1 with the input shaft I, and the sun gear S1 is connectable via the clutch C2 with the input shaft I. The carrier PC1 is connectable via the clutch C3 with the internal gear R2. The sun gear S2 is constantly connected with the input shaft I. The internal gear R1 and carrier PC2 are

EP 0 305 594 B1

constantly connected with the output shaft O. The brake B1 is arranged to anchor the carrier PC1. The brake B2 is arranged to anchor the sun gear S1. The one-way clutch OWC is so constructed that it allows forward rotation (i.e., the same rotation as that of the engine output shaft E), but prevents reverse rotation (i.e., the rotation opposite to the forward rotation). Thus, it acts as a brake only during reverse rotation.

In the above mentioned power transmission mechanism, the rotational state of each of the rotary elements (S1, S2, R1, R2, PC1, and PC2) of the planetary gear sets G1 and G2 can be varied by actuating selected one or combination of the clutches C1, C2 and C3, brake B1, (one-way clutch OWC) and brake B2, thus varying the revolution speed of the output shaft O relative to that of the input shaft I. The four forward speed ratios and one reverse speed ratio are produced if the clutches C1, C2 and C3 and brakes B1 and B2 are engaged in the manner as shown in the following Table.

## Table

| | C1 | C2 | C3 | B1 (DWC) | B2 | Gear Ratio | $\alpha1 = 0.45$ $\alpha2 = 0.45$ |
|---|---|---|---|---|---|---|---|
| 1st speed | | | o | o | | $\dfrac{1 + \alpha2}{\alpha2}$ | 3.22 |
| 2nd speed | | | o | | o | $\dfrac{\alpha1 + \alpha2}{\alpha2(1 + \alpha1)}$ | 1.38 |
| 3rd speed | | o | o | | | 1 | 1 |
| 4th speed | | o | | | o | $\dfrac{1}{1 + \alpha1}$ | 0.69 |
| Reverse | o | | | o | | $-\dfrac{1}{\alpha1}$ | -2.22 |

In the above Table, a sign "o" denotes actuation state of the clutch or brake, $\alpha1$ and $\alpha2$ respectively denote ratios of number of teeth of the internal gears R1 and R2 to number of teeth of the corresponding sun gears S1 and S2. A gear ratio is a ratio of the revolution number of the input shaft I to that of the output shaft O. What is denoted by the label (OWC) below the brake B1 means that the first speed ratio is produced owing to the action of the one-way clutch OWC even if the brake B1 is not applied. However, in this first speed ratio, it is not possible for the output shaft O to drive the engine (that is, no engine braking is effected).

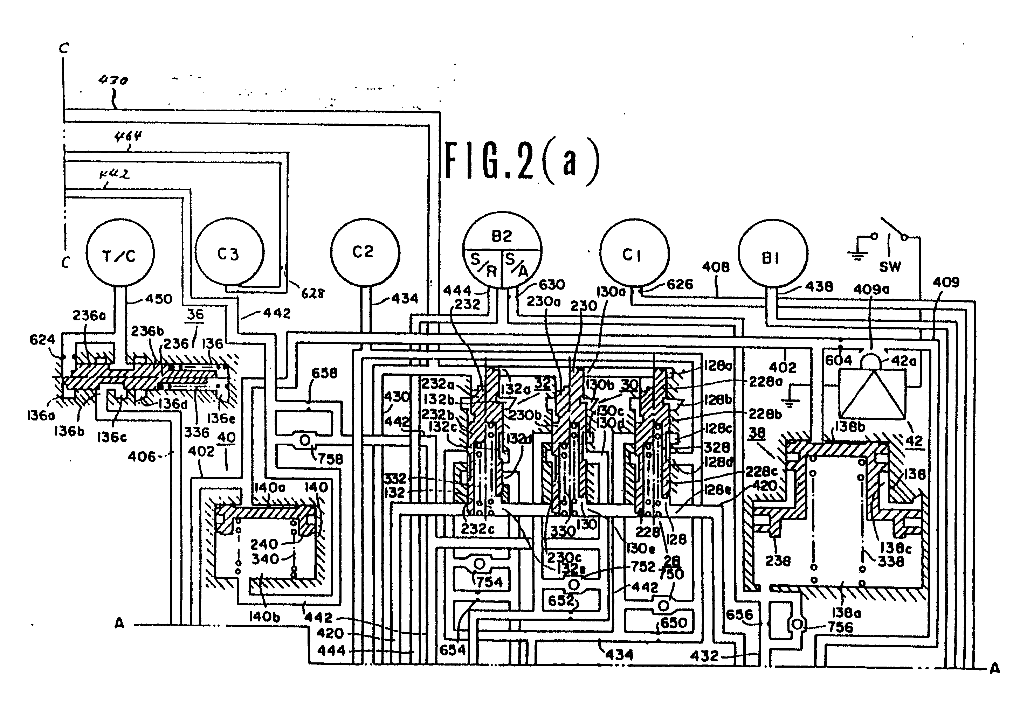

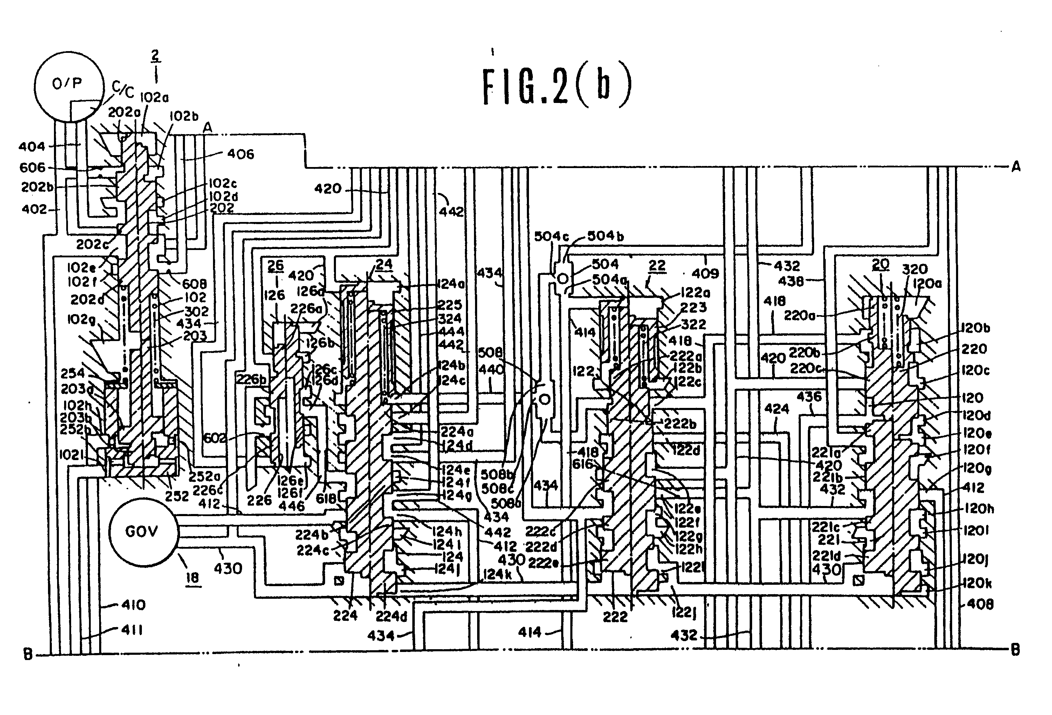

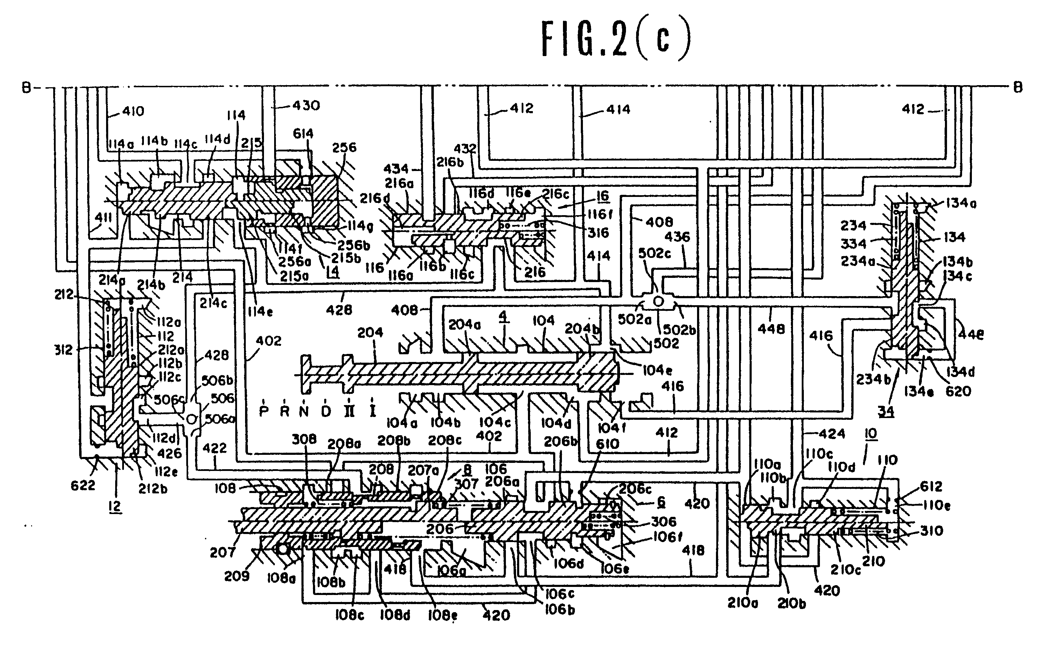

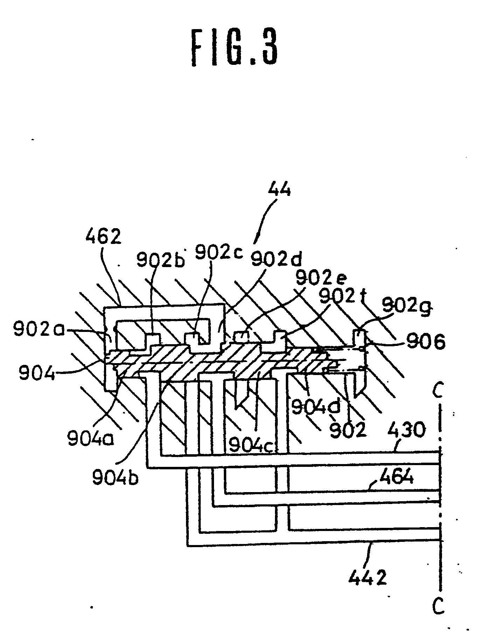

Referring to Figs. 2(a), 2(b), 2(c), and 3, a hydraulic control system for the above power transmission mechanism is described.

This hydraulic control system comprises a regulator valve 2, a manual valve 4, a throttle valve 6, a throttle fail safe valve 8, a throttle modulator valve 10, a pressure modifier valve 12, a cut back valve 14, a line pressure booster valve 16, a governor valve 18, a 1-2 shift valve 20, a 2-3 shift valve 22, a 3-4 shift valve 24, a 2-4 timing valve 26, a 2-3 timing valve 28, a 3-4 timing valve 30, a 3-2 timing valve 32, a first manual range pressure reducing valve 34, a torque converter pressure reducing valve 36, a 1-2 accumulator 38, a 4-3 accumulator 40, an overdrive inhibitor solenoid 42, and a centrifugal force offset valve 44 (see Fig. 3). These valves are interconnected as shown in Figs. 2(a), 2(b), 2(c), and 3, and connected with an oil pump O/P, the torque converter T/C, clutches C1, C2 and brakes B1 and B2 as shown. The brake B2 has a servo apply chamber S/A, i.e., a fluid pressure chamber designed to apply the brake when pressurized, and a servo release chamber S/R, i.e., a fluid pressure chamber designed to release the brake when pressurized. Since the servo release chamber S/R has a larger pressure acting area than a precursor acting area of the servo apply chamber S/A, the brake B2 is released when the pressure is supplied to the servo release chamber S/R irrespective of the supply of fluid pressure to the servo apply chamber S/A. The

3

EP 0 305 594 B1

overdrive inhibitor solenoid 42 is electrically connected with an overdrive inhibitor switch SW.

A portion shown in Figs. 2(a), 2(b) and 2(c) of the hydraulic control is described in co-pending U.S. application Ser. No. Unknown (attorney's Case No. 83SUG389RLS/ISP), filed July 29, 1983 (see FIG. 2(a), 2(b) and 2(c)) and commonly assigned herewith, the disclosure of which application is hereby incorporated by reference in its entirety. Alternatively, it is described in co-pending European application Ser. No. Unknown (Representative's Ref.: EP 1193-30/dg), filed July 29, 1983 by the same applicant of the present application, the disclosure of which application is hereby incorporated by reference in its entirety.

The names of parts denoted by the reference numerals in Figs. 2(a), 2(b) and 2(c) are hereinafter listed. The reference numerals 102, 104, 106, 108, 110, 112, 114, 116, 120, 122, 124, 126, 128, 130, 132 1334 and 136 denote valve bores, the reference numerals 102a~j, 104a~f, 106a~f, 108a~e, 110a~e, 112a~e, 114a~g, 116a~f, 120a~k, 122a~j, 124a~k, 126a~e, 130a~e, 132a~e, and 136a~e ports, the reference numerals 138 and 140 cylinder bores, the reference numerals 202, 203, 204, 206, 210, 212, 214, 215, 216, 220, 221, 222, 224, 226, 228, 230, 232, 234, and 236 spools, the reference numerals 202a~d, 203a~b, 204a~b, 206a~c, 208a, 210a~c, 212a~b, 214a~c, 215a~b, 216a~c, 220a~c, 221a~d, 222a~e, 224a~d, 226a~c, 228a~c, 230a~c, 232a~c, 234a~b, and 236a~b lands, the reference numeral 207 plunger, the reference numeral 208 sleeve, the reference numeral 209 plug, the reference numerals 223 and 225 plugs, the reference numeral 238 and 240 pistons, the reference numeral 252 sleeve, the reference numeral 252a~c ports, the reference numeral 254 spring seat, the reference numerals 302, 306, 307, 308, 310, 312, 316, 320, 322, 324, 328, 330, 332, 334, 336, 338, and 340 springs, the reference numerals 402, 404, 406, 408, 409, 410, 411, 412, 414, 416, 418, 420, 422, 424, 426, 428, 430, 432, 434, 436, 438, 440, 442, 444, 446, 448 and 450 oil conduits, the reference numerals 502, 504, and 506 and 508 shuttle valves, the reference numerals 602, 604, 606, 608, 610, 612, 614, 616, 618, 620, 622, 624, 626, 628, 630, 650, 652, 654, 656 and 658 orificies, and the reference numerals 750, 752, 754, 756 and 758 check valves.

Referring to Fig. 3, the centrifugal force offset valve 44 embodying the present invention comprises a valve bore 902 having five ports 902a to 902g, a valve member in the form of a spool 904 having four lands 904a to 904d (the lands 904b and 904c are of the same diameter and the lands 904a and 904d are of smaller diameter than the former two), and a spring 906 biasing the spool 904 to the left as viewed in Fig. 3. The ports 902a and 902d communicate with each other by a fluid conduit 462, and the port 902d communicates with the clutch C3 via a fluid conduit 464. The port 902b communicates with a fluid conduit 430 which defines a part of a governor pressure circuit. The port 902c and port 902f communicate with a fluid conduit 442. This fluid conduit 442 communicates with the 3-4 shift valve 24 and is always supplied with fluid pressure to establish first, second and third speed ratios. The ports 902e and 902g are drain ports, respectively.

The operation is described hereinafter.

As apparent from the preceding Table, the clutch C2 and brake B2 are actuated in the fourth speed ration. Under this condition, the clutch drum of the clutch C3 rotates at high speeds and is subject to a centrifugal force which is proportional to the square of the rotational speed of the clutch drum. When, under this condition, the 3-4 shift valve 24 (see Fig. 2(b)) shifts from an upshift position thereof, as illustrated by the left half thereof in Fig. 2(b), to a downshift position thereof, as illustrated by the right half thereof in Fig. 2(b), the fluid pressure (line pressure) is supplied to the fluid conduit 442. When the fluid pressure is supplied to the fluid conduit 442, the spool 904 of the centrifugal force offset valve 44 assumes a state indicated by the bottom half thereof in Fig. 3 wherein pressure regulation is effected by using the line pressure in the port 902c as a source of fluid pressure and the port 902e as a drain port. When the spool 904 assumes this state, the fluid pressure Pr in the ports 902a and 902 d is regulated to such a value that the sum of a rightwardly directed force, viewing in Fig. 3, due to the fluid pressure (Pr) in the port 902a and a rightwardly directed force, as viewed in Fig. 3, due to the fluid pressure (governor pressure PG) in the port 902a balances with the sum of a leftwardly directed force, as viewed in Fig. 3, due to the fluid pressure (line pressure PL) in the port 902f and a leftwardly directed force, as viewed in Fig. 3, due to the spring 906. The above mentioned fluid pressure Pr is determined by the following equation.

Assuming that the area of the land 904a is S1, a differential area between the lands 904a and 905b is S2, a differential area between the lands 904c and 904d is S3 (S3 = S1), and a force of the spring 906 is f, then

$$Pr \cdot S1 + PG \cdot S2 = PL \cdot S3 + f$$

$$Pr = (S3/S1) \cdot PL - (S2/S1) \cdot PG + f/Sl.$$

Since S3 = S1,

4

$$Pr = PL - (S2/S1) \cdot PG + f/S1.$$

Since the force f of the spring 906 is set very small, then

$$Pr = PL - (S2/S1) \cdot PG.$$

As will be apparent from the above equation, the fluid pressure Pr decreases as the governor pressure PG increases. The governor pressure is proportional to the square of the rotational speed of the output shaft O and the rotational speed of the output shaft O is proportional to the rotational speed of the clutch drum of the clutch C3. Thus, the fluid pressure Pr decreases as a function of the square of the rotational speed of the clutch drum. Since the fluid pressure created within the clutch drum by the centrifugal force is proportional to the square of the rotational speed of the clutch drum, the above mentioned fluid pressure Pr decreases as the centrifugal force increases. By setting the areas S1 and S2 to appropriate values, it is possible to let a decrease in the fluid pressure Pr due to the rotation of the clutch drum equal to an increase in fluid pressure within the clutch drum due to the centrifugal force. This means that the fluid pressure for actuating the clutch C3 can be kept substantially unaffected by the centrifugal force irrespective of the variation in rotational speed of the clutch drum. Therefore, even at high vehicle speeds, substantial shocks in effecting 4-3 downshifting are avoided. Similarly, substantial shocks in effecting 4-2 downshifting and 4-1 downshifting are avoided.

Since substantially no governor pressure is available when the vehicle moves off from the standstill, line pressure which is not reduced acts on the clutch C3, thus securing sufficiently large capacity of the clutch.

Although in the above described embodiment, the present invention has been applied to the four speed automatic transmission, the present invention may be applied to any automatic transmission as long as it has a clutch which is engageable when its clutch drum is rotating.

From the preceding description, it will be appreciated that substantial shocks in effecting downshifting from the fourth speed ratio to any one of the third, second and first speed ratios are avoided.

## Claims

1. A hydraulic control system for an automatic transmission including a plurality of fluid pressure operated friction units which are selectively made operative and inoperative to produce first, second, third and fourth forward speed ratios, the plurality of fluid pressure operated friction units including a first clutch (C3) which is pressurized and engaged during the first, second and third forward speed ratios, and depressurized and disengaged during the fourth speed ratio, the plurality of fluid operated friction units including a second clutch (C2) which is pressurized and engaged during the third and fourth speed ratios, and depressurized and disengaged during the first and second forward speed ratios, the hydraulic control system comprising:

means for defining a conduit (442, 446) having one end communicating with the first clutch and an opposite end; and

a timing valve (26) connected with the opposite end of said conduit (442) and communicating with the second clutch (C2), said timing valve having an orifice (602) and means (226) which is operative in response to the fluid pressure supplied thereto for discharging hydraulic fluid from said conduit (442, 446) through said orifice (602) when the hydraulic fluid pressure supplied to the second clutch (C2) is lower than a predetermined value, but bypassing said orifice (602) when the hydraulic fluid pressure supplied thereto rises above said predetermined value,

**CHARACTERIZED IN THAT**

said timing valve (26) controls discharge of hydraulic fluid from the first clutch (C3) during an upshift to the fourth speed ratio from the first speed ratio or the second speed ratio in response to hydraulic pressure build-up within the second clutch (C2) such that the hydraulic fluid is discharged from the first clutch (C3) through said orifice (602) until the hydraulic fluid pressure supplied to the second clutch (C2) rises to said predetermined value, and thereafter said orifice (602) is closed and thus the hydraulic fluid is discharged bypassing said orifice (602) after the hydraulic fluid pressure rises above said predetermined value.

## Revendications

1. Dispositif de commande hydraulique pour transmission automatique, comprenant une pluralité d'unités à friction opérées par fluide sous pression, qui sont sélectivement rendues opérationnelles et inopérationnelles afin de produire les premier, second, troisième et quatrième rapport de vitesse vers l'avant, la pluralité d'unités à friction opérées par fluide sous pression comportant un premier embrayage (C3) qui est pressurisé et qui vient en prise durant les premier, second et troisième rapports de vitesse vers l'avant, et qui est dépressurisé et qui n'est pas en prise durant le quatrième rapport de vitesse, la pluralité d'unités à friction opérées par fluide comprenant un second embrayage (C2) qui est pressurisé et qui vient en prise durant les troisième et quatrième rapport de vitesse, et qui est dépressurisé et qui n'est pas en prise durant les premier et second rapports de vitesse vers l'avant, ce dispositif de commande hydraulique comprenant :
   des moyens pour définir un conduit (442, 446) avec une extrémité communiquant avec le premier embrayage et une extrémité opposée; et
   une soupape de temporisation (26) connectée à l'extrémité opposée dudit conduit (442) et communiquant avec le second embrayage (C2), cette soupape de temporisation possédant un orifice (602) et des moyens (226) qui fonctionnent en réponse à la pression de fluide qui leur est appliquée pour décharger le fluide hydraulique hors dudit conduit (442,446) par l'intermédiaire dudit orifice (602) lorsque la pression du fluide hydraulique fourni au second embrayage (C2) est inférieur à une valeur prédéterminée, mais qui contourne cet orifice (602) lorsque la pression de fluide hydraulique appliquée à celui-ci s'élève au-dessus de la valeur prédéterminée,
   CARACTERISE EN CE QUE
   la soupape de temporisation (26) commande le déchargement de fluide hydraulique hors du premier embrayage (C3) durant un passage à la volée vers le quatrième rapport de vitesse depuis le premier rapport de vitesse ou le second rapport de vitesse, en réponse à une élévation de la pression hydraulique à l'intérieur du second embrayage (C2), de sorte que le fluide hydraulique est déchargé hors du premier embrayage (C3) au travers dudit orifice (602) jusqu'à ce que la pression de fluide hydraulique fournie au second embrayage (C2) s'élève jusqu'à atteindre la valeur prédéterminée, et ensuite ledit orifice (602) est fermé pour qu'ainsi le fluide hydraulique soit déchargé en contournant cet orifice (602) après que la pression de fluide hydraulique se soit élevée audessus de la valeur prédéterminée.

## Patentansprüche

1. Hydraulisches Steuersystem für ein automatisches Getriebe mit einer Mehrzahl von fluiddruckbetätigten Reibungseinheiten, die selektiv betätigt bzw. desaktiviert werden können, um ein erstes, zweites, drittes und viertes Vorwärtsgang-Übersetzungsvernhältnis zu erzeugen, wobei die Mehrzahl von fluiddruckbetätigten Reibungseinheiten eine erste Kupplung (C3), welche unter Druck gesetzt wird und während des ersten, zweiten und dritten Übersetzungsverhältnisses eingetückt ist, und die während des vierten Übersetzungsverhältnisses entlastet und gelöst wird, und eine zweite Kupplung (C2) aufweist, die während des dritten und vierten Übersetzungsverhältnisses unter Druck und eingerückt ist, während sie während des ersten und zweiten Übersetzungsverhältnisses entlastet und gelöst ist, wobei das hydraulische Steuersystem folgende Teile aufweist:

   eine Einrichtung zur Bildung einer Leitung (442, 446), die ein Ende aufweist, das mit der ersten Kupplung in Verbindung steht, und die ein zweites Ende aufweist; und

   einen Zeitsteuerschieber (26), der mit dem gegenüberliegenden Ende der Leitung (442) verbunden ist und der mit der zweiten Kupplung (C2) in Verbindung steht, wobei der Zeitsteuerschieber eine Öffnung (602) und eine Einrichtung (226) aufweist, die in Abhängigkeit vom Fluiddruck wirksam ist, der zum Ableiten von Hydraulikflüssigkeit aus der Leitung (442, 446) durch die Öffnung (602) zugeführt wird, wenn der hydraulische Fluiddruck, der zur zweiten Kupplung (C2) geleitet wird, niedriger ist, als ein vorbestimmter Wert, wobei jedoch die Öffnung (602) umgangen wird, wenn der angelegte Hydraulikfluiddruck Über den vorbestimmten Wert ansteigt, **dadurch gekennzeichnet,** daß der Zeitsteuerschieber (26) die Ableitung von Hydraulikfluid aus der ersten Kupplung (C3) während des Heraufschaltens in das vierte Übersetzungsverhältnis vom ersten Übersetzungsverhältnis oder zweiten Übersetzungsverhältnis in Abhängigkeit vom Hydraulikdruck innerhalb der zweiten Kupplung (C2) derart steuert, daß das Hydraulikfluid aus der ersten Kupplung (C3) durch die Öffnung (602) abgeleitet wird, bis der Hydraulikfluiddruck, der zur zweiten Kupplung (C2) geleitet wird, auf den vorbestimmten Wert ansteigt, und daß danach die Öffnung (602) geschlossen wird und daß das Hydraulikfluid unter Umgehung der Öffnung (602) abgeleitet wird, nachdem der Hydraulikfluiddruck über den vorbestimmten Wert angestiegen ist.

# FIG.1

EP 0 305 594 B1

FIG.2(a)

FIG.2(c)

# FIG.3